# EUROPEAN PATENT APPLICATION

(11) **EP 4 438 971 A1**
(43) Date of publication of application: **02.10.2024**
(21) Application number: 24020089.9
(22) Date of filing: 23.03.2024
(51) Int. Cl.: F24H 1/18, F28D 20/00

(54) **DOMESTIC HOT WATER TANK**

(30) Priority: 28.03.2023 PL 44422823
(71) Applicant: Aic Spólka Akcyjna, 81-577 Gdynia (PL)
(72) Inventor: Siemienczuk, Tomasz, 80-351 Gdansk (PL)
(74) Representative: Pomianek, Grazyna

(57) **Abstract**

A domestic hot water tank comprising a shell and inflow and outflow terminals for domestic hot water, where the shell is located in a housing, a side wall of the shell is closed with a top cover on one side and with a bottom cover at the tank base on the other side, and enclosed in thermal insulation in between the shell and the housing, is characterised in that the thermal insulation is made up of a monolithic layer (3) located at least between the side wall (la) of the shell and the top cover (lb) of the shell on the one hand, and the housing (2) on the other hand, formed of styrofoam granules solidified with water vapour.

## Description

The invention concerns a domestic hot water tank, and in particular its thermal insulation and the insulation method.

Conventional water heaters incorporate a tank to store water, with cylindrical external housing arranged concentrically around the water storage tank. Between the tank wall and the cylindrical housing an annular cavity is formed into which foam is typically injected to insulate the tank thermally.

Known, e.g., from patent description US 5,023,031, is the method of insulating the water heater with expanded foam insulating material. The foam is injected into the annular space in between the water tank and the external shell whilst the top cover is removed. In the way, the injected foam can be distributed more even along the perimeter of the tank.

Known from document US 2018/0292107 A1 is an insulating coating comprising the first half of the casing, the second half of the casing, and a blocking mechanism. The first half of the casing and the second half of the casing are connected to each other forming an enclosed shell with hollow interior.

Known from patent document WO 2019/176097 A1 is storage container water heater fitted with a container tank with a cylindrical part of the body and a top plate which covers the top opening in the body part, a housing inside which the storage container is fitted, and a set of thermally insulating materials placed between the outer surface of the storage container and the inner surface of the housing.

Known from patent document WO 2020/217270 A1 is the polyurethane foam insulating material and a tank water heater.

The insulating material of polyurethane foam covers the domestic hot water tank. The polyurethane serving as insulating material comprises a section of low density and at least one section of high density, where the density of the latter is higher than that of the low-density section. At least one high-density section includes an inner wall portion with its inner surface in contact with the surface of the domestic hot water storage tank. The outer part of the wall with its outer surface opposite the inner surface corresponds to the low-density section.

Known from patent document US 4,878,482 is a hot water tank with insulation of cured foam inside a cavity between the inner and outer shells. The prefabricated bottom wall is fixed in between the opposite side walls of the tank and shell. The connection points are protected with fiberglass shielding. The top cover of the body is fitted with an opening to inject insulation of air foam. The bottom wall is the stable member of the supporting body with its outer sealing part either formed as an integral part of the body member or is a separate element fixed to the body member in order to extend the body member's length. Insulation is introduced as fluid which expands giving the insulating effect. The bottom wall is a single-part body element of styrofoam, slightly smaller than the width of the cavity, its external sealing element of polyurethane fixed to the external wall of the body element. The element of styrofoam or the body element has radial slits which enable wrapping around the tank; it features abutting ends and is fixed to the tank with glue.

Known from patent document US 2007/0113800 A1 is a water heater and its insulation system. The heater is configured so as to enable spreading foam insulation in between the water tank and the external coating of the water heater. The body part sets the route of the flow channel for the foam insulation, at least in part. The opposite flap parts span from the end of the body part. The flap parts feature measures which enable fixing each of the flap parts to the water tank.

The purpose of the invention is to improve thermal insulation of the domestic hot water tank and simplify the insulation method whilst simultaneously ensure environment protection.

According to this invention a domestic hot water tank comprising a shell and inflow and outflow terminals for domestic hot water, where the shell is located in a housing, a side wall of the shell is closed with a top cover on one side and with a bottom cover at the tank base on the other side, and enclosed in thermal insulation in between the shell and the housing, is characterised in that the thermal insulation is made up of a monolithic layer located at least between the side wall of the shell and the top cover of the shell on the one hand, and the housing on the other hand, formed of styrofoam granules solidified with water vapour.

The monolithic layer can be formed of styrofoam granules packed at least into the space in between the side wall of the shell and the top cover on the one hand, and the housing on the other hand, and solidified in that space with water vapour, or of granules packed into the space between the side wall of the shell and the top cover on the one hand, and the walls of the form in which the tank shell is placed on the other hand, and solidified in the form with water vapour.

Preferably, the monolithic layer is placed around the shell, between the side wall, the top cover, the bottom cover at the tank base on the one hand, and the housing on the other hand, where the monolithic layer can be formed of styrofoam granules packed into the space between the shell and the housing and solidified in that space with water vapour, or of granules packed into the space between the shell and the walls of the form in which the tank shell is placed, and solidified in the form with water vapour.

Preferably, the apparent density of the monolithic layer in its part at the tank base is higher than in the other part.

Preferably, the thermal insulation in the part at the tank base takes the form of a styrofoam profile placed between the bottom cover at the tank base or its central part and the housing.

Preferably, the bottom cover at the tank base is fitted with feet, where placed in the recess formed by the feet is a styrofoam profile.

The housing contour in cross-section can be square or circular.

The solution according to the invention meets the assumed purposes. The monolithic layer of thermal insulation constitutes a uniform, compact, and coherent whole, and its forming in between the tank shell and its housing ensures that the space is filled in completely.

Compared to other materials, styrofoam demonstrates the lowest thermal conductivity. In addition, it can easily be formed into any desired shape, withstands vibrations and relatively high mechanical loads well. Its deformation at prolonged loads is minor. Moreover, it is resistant to dampness, does not absorb moisture, and does not lose its insulating properties when moist. It does not rot or decay, it is resistant to fungi, mold, and bacteria, it does not age. It is a light and compression-resistant insulating material. Styrofoam used as insulating material is not harmful to the environment and is assessed as an environmentally friendly and recyclable material.

The invention is presented in exemplary embodiments on a drawing where:
Fig. 1 shows the domestic hot water tank in axial section in the first embodiment;
Fig. 2 - the tank as on Fig. 1 in cross section;
Fig. 3 - the domestic hot water tank in axial section in the second embodiment;
Fig. 4 - the tank as on Fig. 3 in cross section;
Fig. 5 - the domestic hot water tank in axial section in the third embodiment;
Fig. 6 - the tank as on Fig. 5 in cross section;
Fig. 7 - the domestic hot water tank in axial section in the fourth embodiment;
Fig. 8 - the tank as on Fig. 7 in cross section.

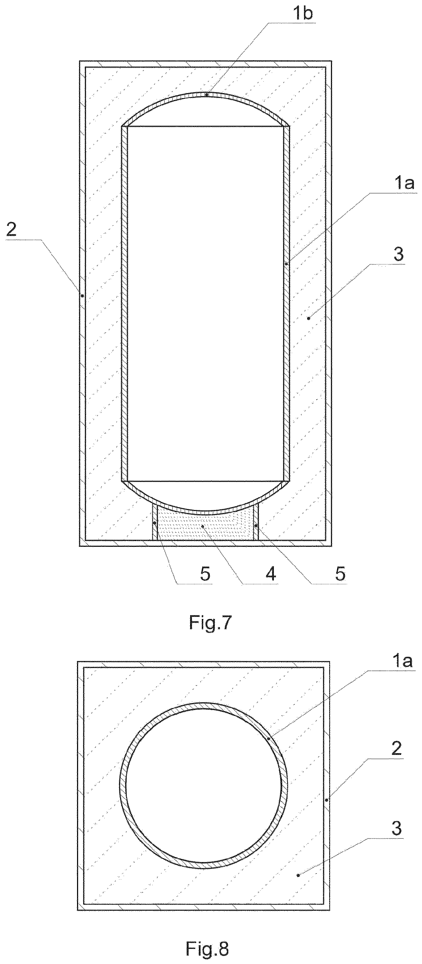

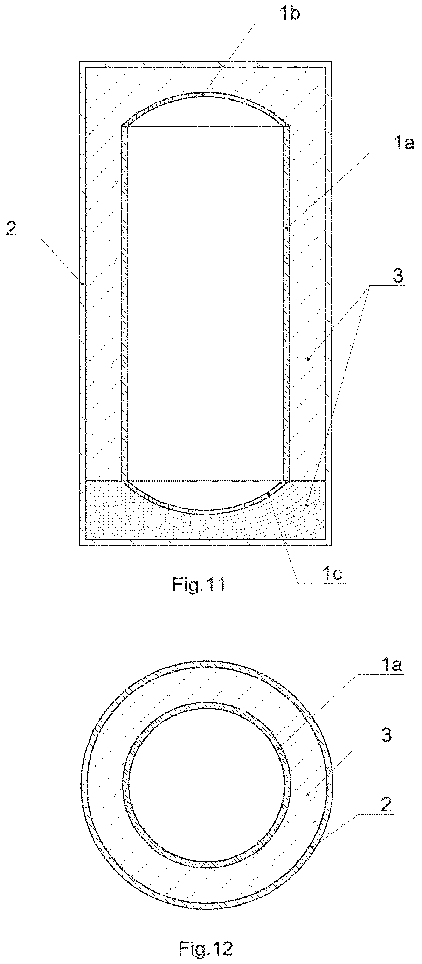

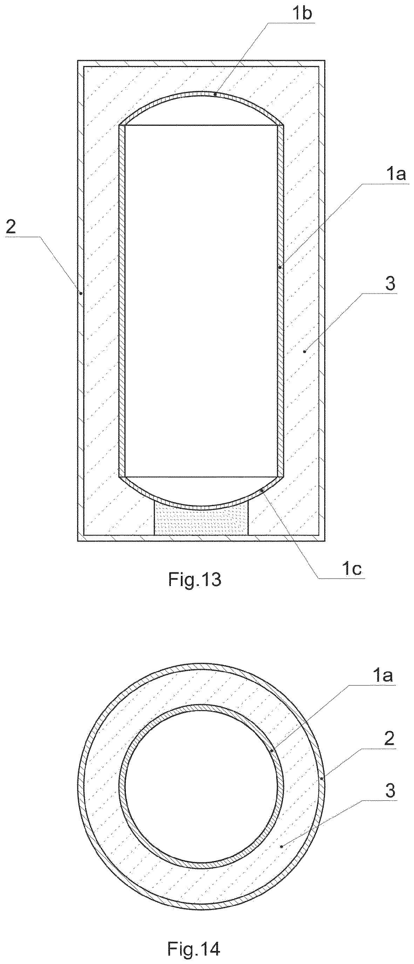

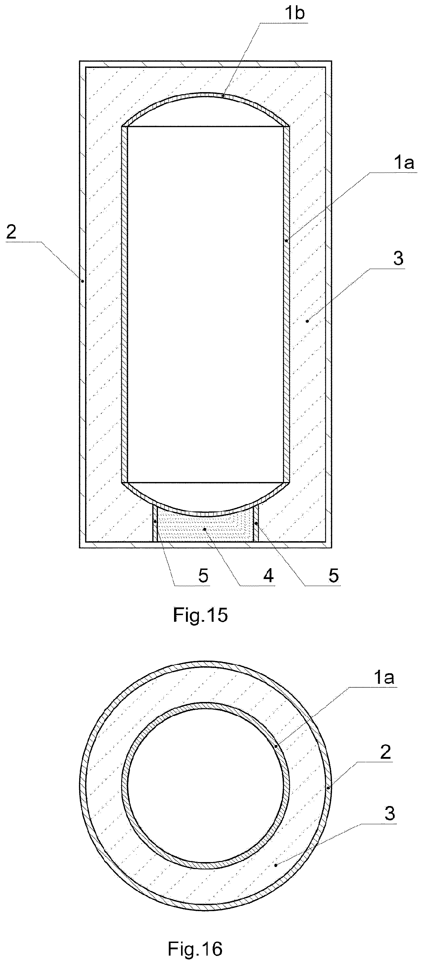

Fig. 8 to Fig. 16 show the domestic hot water tank in respective sections as on

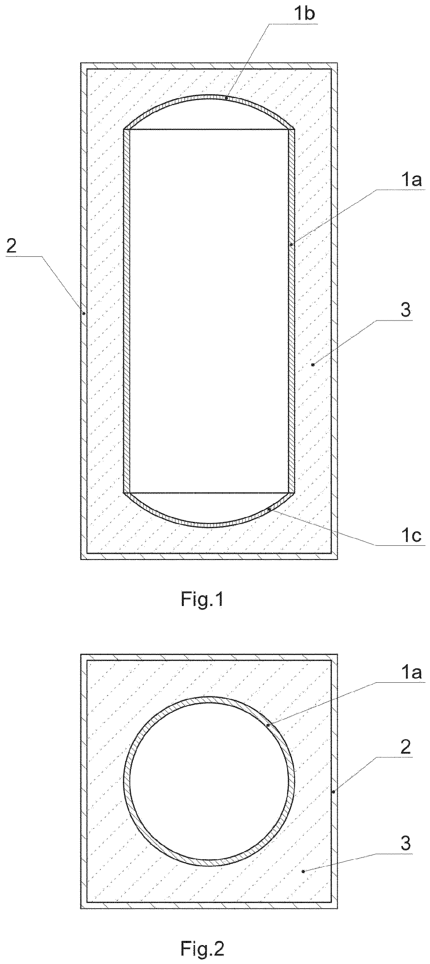

Fig. 1 to Fig. 8, though the shape of the tank housing different.

A domestic hot water tank comprises a shell and domestic hot water inflow and outflow terminals (not shown on the drawing). The shell is situated in the housing 2. The tank can be fitted with a heat exchanger connected to the boiler feedwater circulation system, alternatively, it can be fitted with an electric heater or any other element heating the domestic water. The said tank shell has a side wall 1a enclosed on one side with the top cover 1b and with the bottom cover 1c at the tank base on the opposite side. The tank is thermally insulated with styrofoam.

According to the first embodiment (Fig. 1, Fig. 2), around the tank shell, i.e. between the side wall 1a of the shell and the top cover 1b and the bottom cover 1c on the one hand, and the housing 2 on the other hand, there is thermal insulation 3 made up of a monolithic layer 3 formed of styrofoam granules of the same apparent density, packed into the entire space in between the said side wall 1a and the said covers 1b, 1c on the one hand, and the housing 2 on the other hand, and solidified in that space with water vapour.

In another embodiment variant, the said monolithic layer 3 is formed in the form where the tank shell is placed. Once the monolithic layer is formed, the tank housing 2 is fitted onto the monolithic layer.

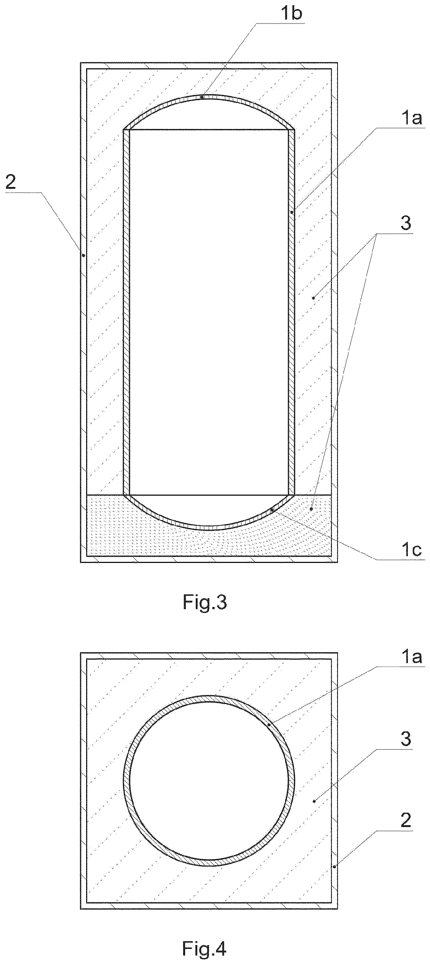

According to embodiment two (Fig. 3, Fig. 4), around the tank shell, i.e. between the side wall 1a of the shell, the top cover 1b, and the bottom cover 1c situated at the tank base on the one hand, and the housing 2 on the other hand, there is thermal insulation 3 made up of a monolithic layer formed of styrofoam granules packed into the entire space in between the said side wall 1a of the shell and the said covers 1b, 1c on the one hand, and the housing 2 on the other hand, and solidified in that space with water vapour, where the apparent density of the monolithic layer in the part at the tank base, i.e. between the bottom cover 1c and the housing 2 is higher than in the remaining part, i.e. between the side wall 1a and the top cover 1b of the shell on the one hand, a the housing 2 on the other hand.

As in the case of the first embodiment, another embodiment variant envisages the forming of the said monolithic layer 3 in the form in which the tank shell is placed. Once the monolithic layer is formed, the tank housing 2 is fitted onto the monolithic layer.

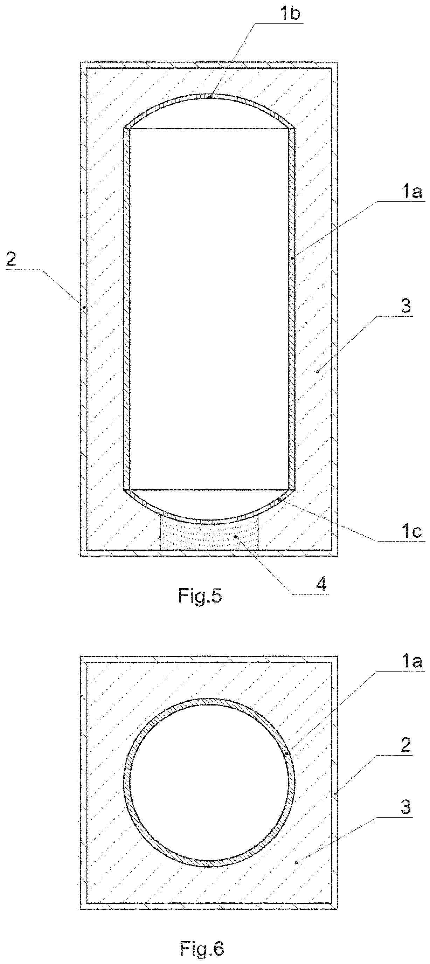

According to the third embodiment (Fig. 5, Fig. 6), in between the side wall 1a of the shell, the top cover 1b, and the peripheral part of the bottom cover 1c at the tank base on the one hand, and the housing on the other hand, there is thermal insulation 3 made up of a monolithic layer formed of styrofoam granules of the same apparent density, packed into that space and solidified therein with water vapour. On the other hand, thermal insulation between the central part of the bottom cover 1c (at the tank base) takes the form of a styrofoam profile 4 placed in the recess between the cover 1c and the housing 2. As in the case of embodiments one and two, another embodiment variant envisages the forming of the said monolithic layer 3 in the form in which the tank shell is placed. Once the monolithic layer is formed, the tank housing 2 is fitted onto the monolithic layer and the profile 4.

In another variant of the described embodiment three, (Fig. 7, Fig. 8), when the bottom cover 1c (at the tank base) is fitted with feet 5 to mount the tank, the said profile 4 is placed in the recess formed by the feet 5, and the remaining space between the side wall 1a of the shell, the top cover 1b, and the peripheral part of the bottom cover 1c at the tank base on the one hand, and the housing 2 on the other hand, is filled with thermal insulation 3 of a monolithic layer formed of styrofoam granules of the same apparent density, packed into that space and solidified therein with water vapour.

As in the embodiments described above, the said monolithic layer 3 is formed in the form in which the tank shell is placed. Once the monolithic layer is formed, the tank housing 2 is fitted onto the monolithic layer 3 and the profile 4.

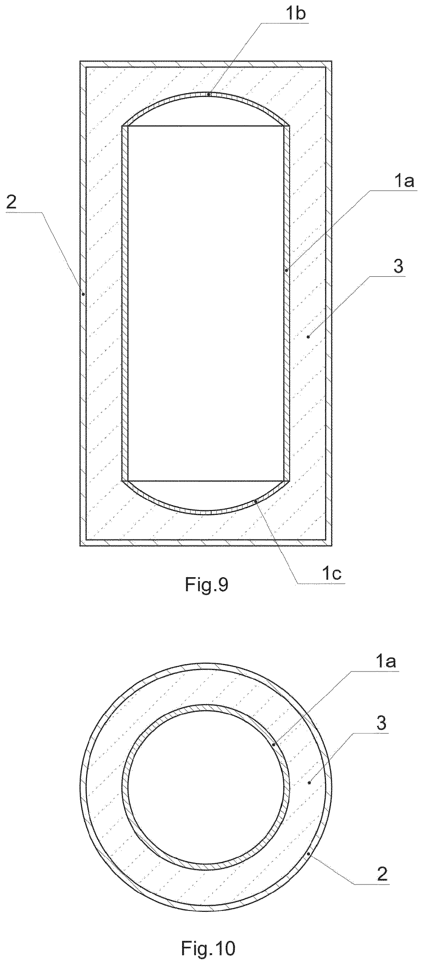

In the invention embodiments shown on Fig. 1 to Fig. 8, the housing 2 in cross section has the contour of a square. In the other embodiments shown on Fig. 9 to Fig. 16, corresponding as appropriate to the embodiments presented on Fig. 1 to Fig. 8 and described above, the housing 2 in cross section has the contour of a circle.

In all embodiments, the styrofoam granules are treated with water vapour which triggers their foaming, expansion, and the closure of any empty spaces. The said thermal insulation can be formed of any type of styrofoam.

### List of numerical references

- 1a: - side wall of the tank shell
- 1b: - top cover of the side wall of the tank shell
- 1c: - bottom cover of the shell side wall at the tank base
- 2: - tank housing
- 3: - monolithic layer of styrofoam
- 4: - styrofoam profile
- 5: - feet of the bottom cover of the shell side wall at the tank base

## Claims

1. A domestic hot water tank comprising a shell and inflow and outflow terminals for domestic hot water, where the shell is located in a housing, a side wall of the shell is closed with a top cover on one side and with a bottom cover at the tank base on the other side, and enclosed in thermal insulation in between the shell and the housing, **characterised in that** the thermal insulation is made up of a monolithic layer (3) located at least between the side wall (1a) of the shell and the top cover (1b) of the shell on the one hand, and the housing (2) on the other hand, formed of styrofoam granules solidified with water vapour.

2. The tank according to claim 1, **characterised in that** the monolithic layer (3) is formed of styrofoam granules packed at least into the space in between the side wall (1a) of the shell and the top cover (1b) on the one hand, and the housing (2) on the other hand, and solidified **in that** space with water vapour.

3. The tank according to claim 1, **characterised in that** the monolithic layer (3) is placed around the shell, between the side wall (1a), the top cover (1b), the bottom cover (1c) at the tank base on the one hand, and the housing (2) on the other hand.

4. The tank according to claim 3, **characterised in that** the monolithic layer (3) is formed of styrofoam granules packed into the space between the shell and the housing (2) and solidified **in that** space with water vapour.

5. The tank according to claims 3 or 4, **characterised in that** the apparent density of the monolithic layer (3) in the part at the tank base is higher than in the other part.

6. The tank according to claims 1 or 2, **characterised in that** the thermal insulation in the part at the tank base takes the form of a styrofoam profile (4) placed between the bottom cover (1c) at the tank base or its central part, and the housing (2).

7. The tank according to claim 6, **characterised in that** the bottom cover (1c) at the tank base is fitted with feet (5), where placed in the recess formed by the feet (5) is a styrofoam profile (4).

8. The tank according to claim 1, **characterised in that** contour of the housing (2) in cross section is square or circular.
